# EUROPEAN PATENT APPLICATION

(11) **EP 4 734 275 A1**
(43) Date of publication of application: **29.04.2026**
(21) Application number: 23944698.2
(22) Date of filing: 12.07.2023
(51) Int. Cl.: H01M 50/593, H01M 50/147, H01M 50/188, H01M 50/184, H01M 50/597

(54) **END CAP ASSEMBLY, ENERGY STORAGE APPARATUS AND ELECTRIC DEVICE**

(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: LI, Maosong, Xiamen, Fujian 361100 (CN); TAN, Jiben, Xiamen, Fujian 361100 (CN)
(74) Representative: Santarelli
(86) International application number: PCT/CN2023/107081
(87) International publication number: WO 2025/010678

(57) **Abstract**

An end-cover assembly (120), an energy storage apparatus (100), and an electricity-consumption device are provided in the present disclosure. For the end-cover assembly (120), an upper plastic member (73) is provided with a protruding rib (732), the protruding rib (732) is positioned between a post-body portion (711) and a sealing ring (72), and the protruding rib (732) can be filled into a gap between the post-body portion (711) and the sealing ring (72), thereby improving the sealing performance between a terminal post and the sealing ring (72). In addition, the protruding rib (732) can also isolate the post-body portion (711) from a hole wall of a mounting hole (207), so as to increase a creepage distance between the post-body portion (711) and the hole wall of the mounting hole (207), thereby helping to ensure the insulation performance between the terminal post (71) and an end cover (20).

## Description

### TECHNICAL FIELD

This disclosure relates to the field of energy storage technology, and in particular, to an end-cover assembly, an energy storage apparatus, and an electricity-consumption device.

### BACKGROUND

A rechargeable battery, also known as a secondary battery or storage battery, refers to a battery that can be recharged to reactivate an active material after discharge, allowing continued use. The recyclable nature of rechargeable batteries has gradually made them the primary power source for electricity-consumption devices. As the demand for rechargeable batteries increases, the performance requirements for these batteries have also risen, particularly regarding the energy density per unit volume. The sealing performance of the end-cover assembly of the battery is a crucial parameter affecting the reliability of the battery. At present, the end-cover assembly mainly uses a sealing ring sleeved on a terminal post to realize sealing between the terminal post and an end cover. However, the terminal post, the sealing ring, and the end cover are all separately processed components, assembly tolerances may exist between any two of them, resulting in the sealing ring failing to achieve a reliable seal between the terminal post and the end cover, and the sealing performance of the end-cover assembly is relatively poor.

### SUMMARY

The present disclosure provides an end-cover assembly, an energy storage apparatus, and an electricity-consumption device, which are used to improve the sealing performance of the end-cover assembly.

In a first aspect, the present disclosure provides an end-cover assembly that is applicable in an energy storage apparatus. The end-cover assembly includes an end cover and a terminal-post assembly. The end cover defines a mounting hole. The mounting hole extends through the end cover in a thickness direction of the end cover. The terminal-post assembly includes a terminal post, a sealing ring, and an upper plastic member. The terminal post includes a post-body portion and a flange portion. The post-body portion defines an annular groove. The annular groove has an opening positioned on an outer peripheral surface of the post-body portion. The annular groove is defined around a periphery of the post-body portion. The post-body portion passes through the mounting hole. The flange portion is fixedly connected to one end of the post-body portion. The sealing ring is sleeved on the post-body portion and is clamped between the end cover and the terminal post. The flange portion abuts against a surface of the sealing ring positioned facing towards the flange portion. The upper plastic member is sleeved on the post-body portion and covers a groove wall surface of the annular groove. The upper plastic member is provided with a protruding ring and a protruding rib. The protruding ring is disposed on a surface of the upper plastic member positioned facing towards the end cover, and is positioned around the post-body portion. At least part of the protruding ring is positioned in the mounting hole, is disposed between a hole wall of the mounting hole and the post-body portion, and abuts against part of a surface of the sealing ring positioned facing away from the flange portion. The protruding rib is disposed on a surface of the protruding ring positioned facing towards the sealing ring and is positioned around the post-body portion. The protruding rib is positioned between an inner side surface of the sealing ring and the outer peripheral surface of the post-body portion.

The protruding rib has a thickness ranging from 0.15 mm to 1.05 mm.

The protruding rib has a width ranging from 0.05 mm to 0.55 mm.

The post-body portion defines a stepped groove. The stepped groove has an opening positioned on a surface of the post-body portion positioned facing away from the flange portion. The stepped groove is defined around an edge of the post-body portion and extends through the outer peripheral surface of the post-body portion. The upper plastic member is further provided with a stepped ring. The stepped ring is fixedly connected to a side surface of the upper plastic member positioned facing towards the terminal post, and is positioned at one side of the upper plastic member positioned facing away from the end cover. The stepped ring partially covers the stepped groove. An inner side surface of the stepped ring is spaced apart from a side wall surface of the stepped groove.

The mounting hole comprises a mounting hole portion and a recessed-platform hole portion. The recessed-platform hole portion is positioned at one side of the mounting hole portion and is in communication with the mounting hole portion. A cross-sectional area of the recessed-platform hole portion is larger than a cross-sectional area of the mounting hole portion. The recessed-platform hole portion is provided with multiple flow-guiding portions on a hole wall of the recessed-platform hole portion. The multiple flow-guiding portions are arranged around the mounting hole portion at intervals. The upper plastic member covers the multiple flow-guiding portions.

There is a distance between each of the multiple flow-guiding portions and the mounting hole portion.

The distance between each of the multiple flow-guiding portions and the mounting hole portion ranges from 0.15 mm to 0.65 mm.

A thickness of each of the multiple flow-guiding portions gradually decreases in a direction from the recessed-platform hole portion towards the mounting hole portion.

Each of the multiple flow-guiding portions has a flow-guiding surface. An angle between the flow-guiding surface and a surface of the end cover ranges from 2 degrees to 15 degrees.

The mounting hole portion includes a mounting part and a connecting part. The connecting part is in communication between the mounting part and the recessed-platform hole portion. A cross-section of the connecting part gradually decreases in the direction from the recessed-platform hole portion to the mounting hole portion.

The connecting part has a hole wall surface that is an arc-shaped surface.

In a second aspect, the present disclosure further provides an energy storage apparatus. The energy storage apparatus includes a housing and the end-cover assembly in the first aspect. The end-cover assembly is mounted at one side of the housing.

In a third aspect, the present disclosure further provides an electricity-consumption device. The electricity-consumption device includes the energy storage apparatus in the second aspect. The energy storage apparatus is configured to power the electricity-consumption device.

For the end-cover assembly illustrated in the present disclosure, the upper plastic member is provided with a protruding rib, the protruding rib is positioned between the post-body portion and the sealing ring, and the protruding rib can be filled into the gap between the post-body portion and the sealing ring, thereby improving the sealing performance between the terminal post and the sealing ring. In addition, the protruding rib can also isolate the post-body portion from the hole wall of the mounting hole, so as to increase the creepage distance between the post-body portion and the hole wall of the mounting hole, thereby helping to ensure the insulation performance between the terminal post and the end cover. Moreover, the protruding rib can also press and fold metal burrs generated during the cutting and milling process of the terminal post, so that a short-circuit between the terminal post and the end cover, caused by the metal burrs extending into the mounting hole, can be avoided, thereby ensuring the insulation between the terminal post and the end cover.

### BRIEF DESCRIPTION OF THE DRAWINGS

To more clearly illustrate technical solutions in embodiments of the present disclosure, the accompanying drawings required for use in the embodiments of the present disclosure are described below.
FIG. 1 is an application scenario view of an energy storage system provided in embodiments of the present disclosure.
FIG. 2 is a schematic structural view of an energy storage apparatus of the energy storage system illustrated in FIG. 1.
FIG. 3 is a schematic structural view of an end-cover assembly of the energy storage apparatus illustrated in FIG. 2.
FIG. 4 is a schematic structural view of the end-cover assembly illustrated in FIG. 3 after being cut along line A-A.
FIG. 5 is an exploded schematic structural view of the end-cover assembly illustrated in FIG. 3.
FIG. 6 is a schematic structural view of a lower plastic member of the end-cover assembly illustrated in FIG. 5.
FIG. 7 is a schematic structural view of an end cover of the end-cover assembly illustrated in FIG. 5.
FIG. 8 is a schematic structural view of the end cover illustrated in FIG. 7 after being cut along line B-B.
FIG. 9 is a schematic cross-sectional structural view of the end cover illustrated in FIG. 7 after being cut along line C-C.
FIG. 10 is an exploded schematic structural view of a positive electrode assembly of the end-cover assembly illustrated in FIG. 5.
FIG. 11 is a schematic structural view of a first terminal-post of the positive electrode assembly illustrated in FIG. 10.
FIG. 12 is a schematic structural view of the first terminal-post illustrated in FIG. 11 after being cut along line D-D.
FIG. 13 is a schematic structural view of a first upper plastic member of the positive electrode assembly illustrated in FIG. 10 from another angle.
FIG. 14 is a schematic structural view of a first upper plastic member of the positive electrode assembly illustrated in FIG. 10 after being cut along line E-E.
FIG. 15 is an exploded schematic structural view of a negative electrode assembly of the end-cover assembly illustrated in FIG. 5.

Description of reference signs of the accompanying drawings: energy storage system 1000, photovoltaic energy conversion apparatus 400, wind energy conversion apparatus 300, power grid 200, energy storage apparatus 100, housing 110, end-cover assembly 120, lower plastic member 10, end cover 20, explosion-proof valve 30, protective sheet 40, sealing member 50, terminal-post assembly 60, positive electrode assembly 70, negative electrode assembly 80, positive lower plastic member 11, negative lower plastic member 12, first assembly boss 111, first through-hole 112, electrolyte inlet hole 113, grid portion 121, second assembly boss 122, second through-hole 123, vent hole 124, mounting boss 21, first mounting boss 22, second mounting boss 23, avoidance groove 201, explosion-proof hole 202, electrolyte injection hole 203, mounting hole 204, first avoidance groove 205, second avoidance groove 206, first mounting hole 207, second mounting hole 208, first mounting-hole portion 2071, first recessed-platform-hole portion 2072, first protrusion 24, first flow-guiding portion 241, first flow-guiding surface 242, first mounting part 2073, first connecting part 2074, second mounting-hole portion 2081, second recessed-platform-hole portion 2082, first terminal-post 71, first sealing ring 72, first upper plastic member 73, first connector 74, first post-body portion 711, first flange portion 712, first stepped groove 713, first annular groove 714, first texture ring 715, first pattern ring 716, first protruding ring 731, first protruding rib 732, first stepped ring 733, first identification groove 734, second terminal-post 81, second sealing ring 82, second upper plastic member 83, second connector 84, second identification groove 834.

### DETAILED DESCRIPTION

The following will describe technical solutions of embodiments of the present disclosure clearly and completely with reference to the accompanying drawings in embodiments of the present disclosure.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is known to all, in order to achieve the purpose of carbon neutralization, the main way to generate green electric energy at present is to develop green energy such as photovoltaic and wind power to replace fossil energy.

At present, generation of green electric energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage will cause loss of the power. Therefore, "curtailment of wind and photovoltaics" may occur due to insufficient power demand or insufficient power-grid admitting ability, and energy storage is required to solve these problems. That is, electric energy is stored by converting it into other forms of energy by physical or chemical means, and energy is released by converting it into electric energy when needed. In brief, energy storage is similar to a large "power bank", which stores electric energy when photovoltaics and wind energy are sufficient and releases stored electric power when needed.

Taking electrochemical energy storage as an example, an energy storage apparatus is provided in the present disclosure. The energy storage apparatus includes one group of chemical batteries. Chemical elements in the chemical batteries can be used as an energy storage medium to implement a charging/discharging process through chemical reaction or change of the energy storage medium. In brief, electric energy generated by solar energy and wind energy is stored in the chemical batteries. When the usage of external electric energy reaches a peak, the power stored in the chemical batteries is released for use, or is transferred to a place where the power is scarce for reuse.

At present, energy storage may be applied in various application scenarios, including power-generation-side energy storage, grid-side energy storage, base-station-side energy storage, user-side energy storage, etc. Corresponding types of energy storage apparatuses include the following.
(1) A large-sized energy storage container applied in a grid-side energy-storage scenario. The energy storage container may serve as a high-quality active and reactive regulation power source in the grid, which can realize matching of electric energy loads in time and space, enhance the capacity for integration of renewable energy, and is of great significance in the backup of the grid system, relieving the pressure of power supply at a peak load, and peak shaving and frequency modulation.
(2) Small and medium-sized energy storage cabinets are used in industrial and commercial energy storage scenarios (banks, shopping malls, etc.) on the user side and small household energy storage boxes used in household energy storage scenarios on the user side. The main operating mode is "peak shaving and valley filling". There is a large price difference in electricity bills at peak and valley according to electricity demand. After users have the energy storage device, in order to reduce costs, they usually charge the energy storage cabinets/boxes during the low electricity price period. During the peak electricity price period, the electricity in the energy storage device is discharged for use to achieve the purpose of saving electricity bills. In addition, in remote regions, as well as regions prone to natural disasters such as earthquakes and hurricanes, the presence of household energy storage devices is equivalent to users providing backup power for themselves and the power grid, eliminating the inconvenience caused by frequent power outages due to disasters or other reasons.

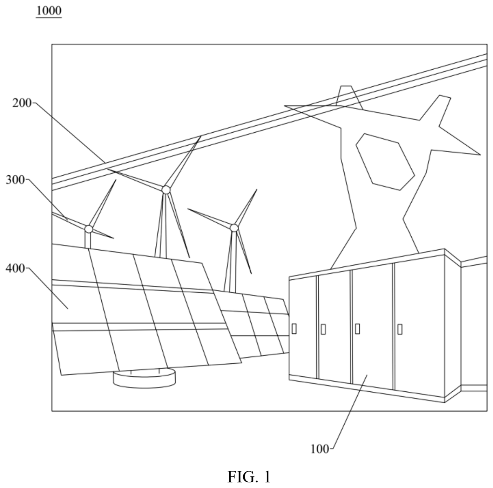

Reference can be made to FIG. 1, which is an application scenario view of an energy storage system 1000 provided in embodiments of the present disclosure.

The energy storage system 1000 includes a photovoltaic energy conversion apparatus 400, a wind energy conversion apparatus 300, a power grid 200, and an energy storage apparatus 100. The energy storage apparatus 100 may serve as an outdoor-mounted energy storage cabinet. Exemplarily, the photovoltaic energy conversion apparatus 400 may be a photovoltaic panel, and the wind energy conversion apparatus 300 may be a wind turbine. During the off-peak electricity price period, the photovoltaic energy conversion apparatus 400 can convert solar energy into electric energy, and the wind energy conversion apparatus 300 can convert wind energy into electric energy. The energy storage apparatus 100 can store the electric energy converted by the photovoltaic energy conversion apparatus 400 and the wind energy conversion apparatus 300, and can also supply the electric energy to the power grid 200 during the peak electricity price period. The electric energy of the power grid can be transmitted through cables.

There may be multiple energy storage apparatus 100, and the multiple energy storage apparatus 100 are connected in series and/or in parallel with each other. In addition, the energy storage system 1000 may also include an energy storage box, which is used to accommodate the multiple energy storage apparatus. It may be noted that in the embodiments, "multiple" means more than two, and similar descriptions hereinafter can be understood in the same way.

It can be understood that the energy storage apparatus 100 may include but is not limited to a cell, a battery module, a battery pack, a battery system, etc. When the energy storage apparatus 100 is a cell, the cell may be a prismatic cell. When the energy storage apparatus 100 is a battery module, the energy storage apparatus 100 may include multiple cells and multiple connecting sheets, and each connecting sheet is electrically connected between two cells. The connecting sheet may be an aluminum bus bar. The cells may be connected in series and/or in parallel through multiple connecting sheets.

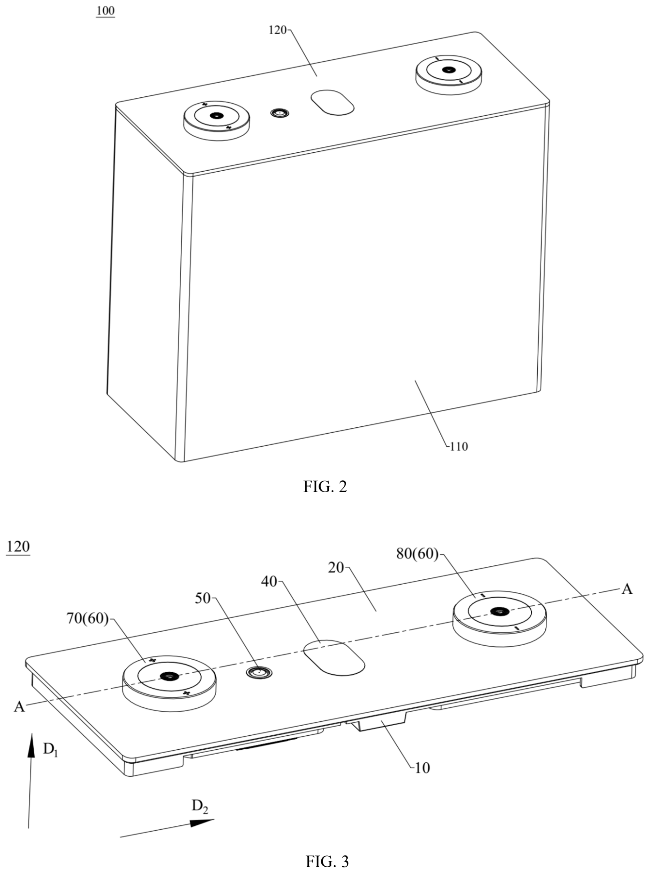

Reference can be made to FIG. 2, which is a schematic structural view of an energy storage apparatus 100 in the energy storage system 1000 illustrated in FIG. 1.

In this embodiment, the energy storage apparatus 100 is a prismatic cell. The energy storage apparatus 100 includes a housing 110, an electrode assembly (not shown in the figure), and an end-cover assembly 120. The housing 110 has an opening (not shown in the figure) and defines an accommodating cavity (not shown in the figure). An electrolyte is stored in the accommodating cavity. The electrode assembly is accommodated in the accommodating cavity and immersed in the electrolyte. The end-cover assembly 120 is mounted at one side of the housing 110 and seals the opening of the housing.

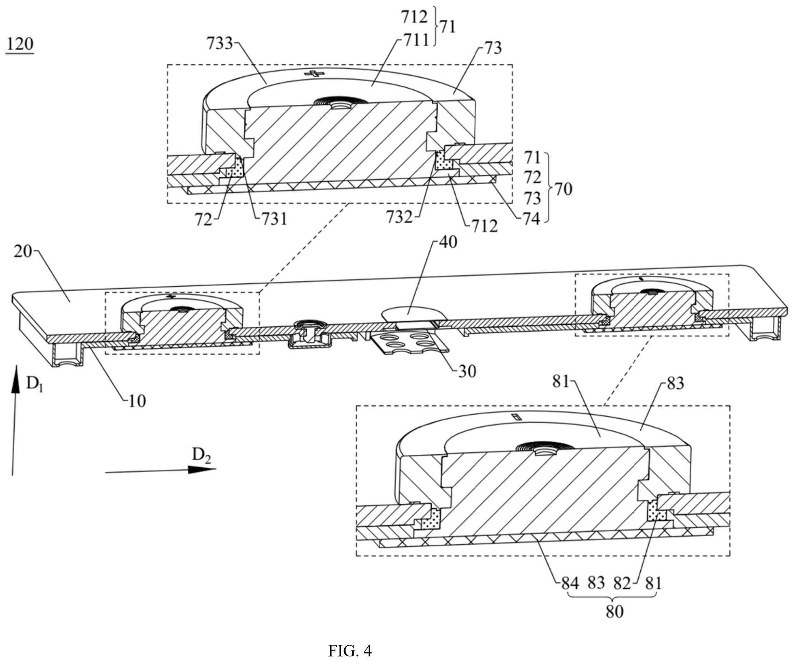

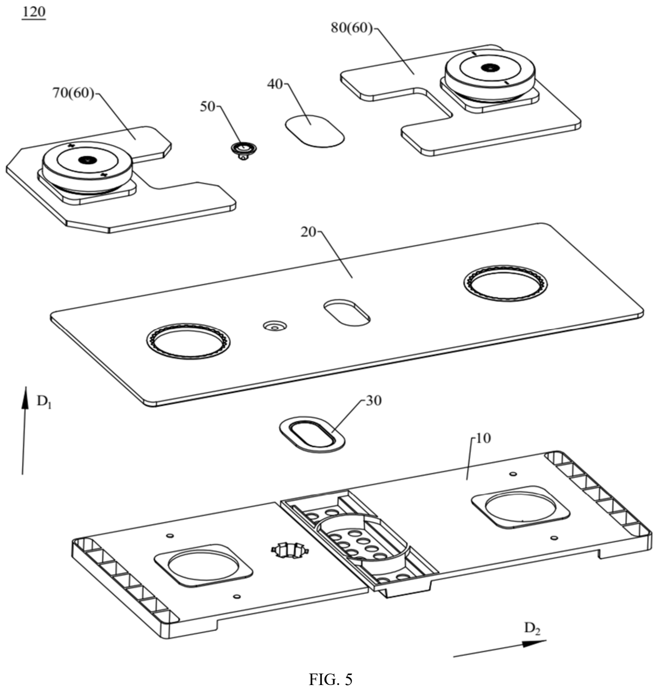

Reference can be made to FIG. 3 to FIG. 5, where FIG. 3 is a schematic structural view of an end-cover assembly 120 of the energy storage apparatus 100 illustrated in FIG. 2, FIG. 4 is a schematic structural view of the end-cover assembly 120 illustrated in FIG. 3 after being cut along line A-A, and FIG. 5 is an exploded schematic structural view of the end-cover assembly 120 illustrated in FIG. 3. Here, "cut along line A-A" means cutting along a plane where line A-A lies, and similar descriptions hereinafter may be understood in the same way.

The end-cover assembly 120 includes a lower plastic member 10, an end cover 20, an explosion-proof valve 30, a protective sheet 40, a sealing member 50, and two terminal-post assemblies 60. The end cover 20 is mounted at one side of the lower plastic member 10 in the thickness direction (i.e., the thickness direction D₁ of the end-cover assembly 120). The explosion-proof valve 30, the protective sheet 40, the sealing member 50, and the two terminal-post assemblies 60 are all mounted on the end cover 20. In the thickness direction D₁ of the end-cover assembly 120, the explosion-proof valve 30 is positioned aligned with the protective sheet 40. The sealing member 50 is located at one side of the protective sheet 40 and is spaced apart from the protective sheet 40. In the length direction D₂ of the end-cover assembly 120, the two terminal-post assemblies 60 are respectively positioned at opposite sides of the protective sheet 40. The two terminal-post assemblies 60 are a positive electrode assembly 70 and a negative electrode assembly 80 respectively. The positive electrode assembly 70 and the sealing member 50 are positioned at the same side of the protective sheet 40, and the positive electrode assembly 70 is positioned at one side of the sealing member 50 away from the protective sheet 40 and is spaced apart from the sealing member 50. The negative electrode assembly 80 is positioned at one side of the protective sheet 40 away from the sealing member 50 and is spaced apart from the protective sheet 40.

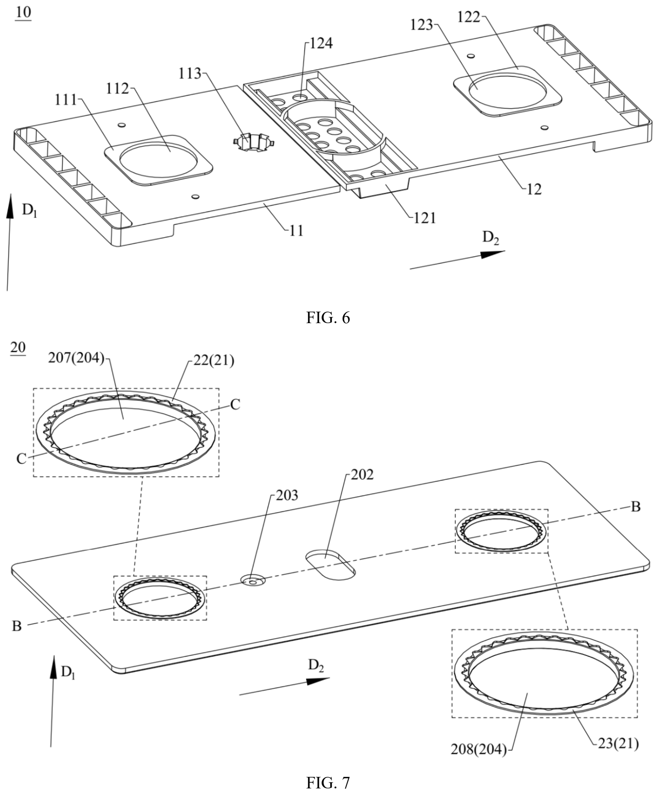

Reference can be made to FIG. 4 and FIG. 6, where FIG. 6 is a schematic structural view of a lower plastic member 10 of the end-cover assembly 120 illustrated in FIG. 5.

In this embodiment, the lower plastic member 10 is made of plastic. The lower plastic member 10 includes a positive lower plastic member 11 and a negative lower plastic member 12. In the length direction of the lower plastic member 10 (i.e., the length direction D₂ of the end-cover assembly 120), the positive lower plastic member 11 and the negative lower plastic member 12 are arranged in sequence. It may be noted that in the embodiment of the present disclosure, a direction from the positive lower plastic member 11 to the negative lower plastic member 12 is defined as the length direction D₂ of the end-cover assembly 120. In some other embodiments, a direction from the negative lower plastic member 12 to the positive lower plastic member 11 may also be defined as the length direction D₂ of the end-cover assembly 120. The embodiment of the present disclosure does not specifically limit this.

The positive lower plastic member 11 is provided with a first assembly boss 111 protruding from a surface of the positive lower plastic member 11 positioned facing towards the end cover 20. The first assembly boss 111 is positioned at one side of the positive lower plastic member 11 away from the negative lower plastic member 12. Exemplarily, the first assembly boss 111 is a square boss. The positive lower plastic member 11 further defines a first through-hole 112 and an electrolyte inlet hole 113. Both the first through-hole 112 and the electrolyte inlet hole 113 extend through the positive lower plastic member 11 in the thickness direction of the positive lower plastic member 11 (i.e., the thickness direction D₁ of the end-cover assembly 120). Specifically, an opening of the first through-hole 112 is positioned on a surface of the first assembly boss 111 positioned facing towards the end cover 20. The electrolyte inlet hole 113 is positioned at one side of the first assembly boss 111 close to the negative lower plastic member 12 and is spaced apart from the first assembly boss 111. Exemplarily, the first through-hole 112 is a circular hole.

The negative lower plastic member 12 includes a grid portion 121. The grid portion 121 is positioned at one side of the negative lower plastic member 12 close to the positive lower plastic member 11. The negative lower plastic member 12 is provided with a second assembly boss 122 protruding from a surface of the negative lower plastic member 12 positioned facing towards the end cover 20. The second assembly boss 122 is positioned at one side of the negative lower plastic member 12 away from the positive lower plastic member 11. Exemplarily, the second assembly boss 122 is a square boss.

The negative lower plastic member 12 further defines a second through-hole 123 and multiple vent holes 124. Both the second through-hole 123 and the multiple vent holes 124 extend through the negative lower plastic member 12 in the thickness direction of the negative lower plastic member 12 (i.e., the thickness direction D₁ of the end-cover assembly 120). Specifically, an opening of the second through-hole 123 is positioned on a surface of the second assembly boss 122 positioned facing towards the end cover 20. Exemplarily, the second through-hole 123 is a circular hole. The multiple vent holes 124 are all positioned on the grid portion 121 and extend through the grid portion 121 in the thickness direction of the grid portion 121 (i.e., the thickness direction D₁ of the end-cover assembly 120). Specifically, the multiple vent holes 124 are arranged at intervals. The multiple vent holes 124 are arranged in an array. Exemplarily, the multiple vent holes 124 are all square holes.

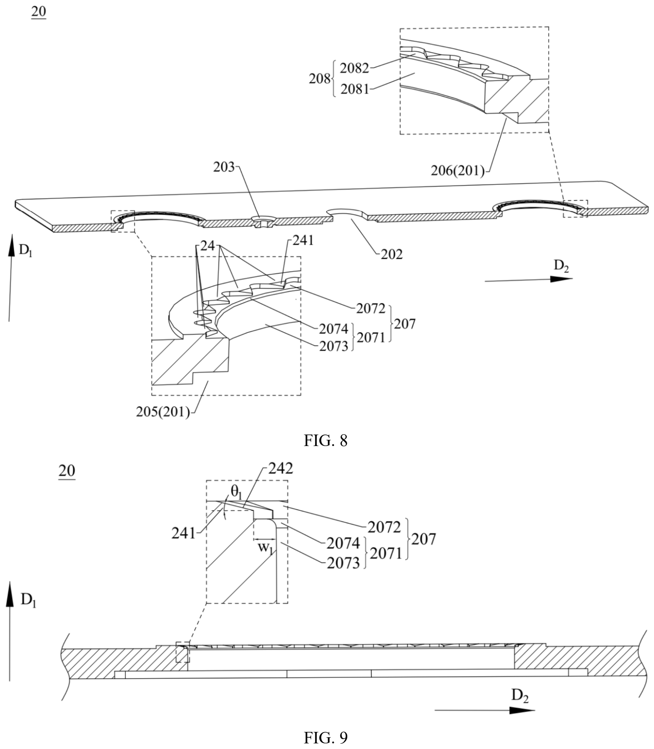

Reference can be made to FIG. 7 and FIG. 8 together, where FIG. 7 is a schematic structural view of an end cover 20 of the end-cover assembly 120 illustrated in FIG. 5, and FIG. 8 is a schematic structural view of the end cover 20 illustrated in FIG. 7 after being cut along line B-B.

In this embodiment, the end cover 20 is a smooth aluminum sheet made of aluminum. The end cover 20 is provided with two mounting bosses 21 protruding from a surface of the end cover 20 away from the lower plastic member 10. The two mounting bosses 21 are a first mounting boss 22 and a second mounting boss 23 respectively. Specifically, the first mounting boss 22 protrudes from the surface of the end cover 20 away from the positive lower plastic member 11, and the second mounting boss 23 protrudes from the surface of the end cover 20 away from the negative lower plastic member 12. In the length direction of the end cover 20 (i.e., the length direction D₂ of the end-cover assembly 120), the first mounting boss 22 and the second mounting boss 23 are respectively positioned at opposite sides of the end cover 20. Exemplarily, both the first mounting boss 22 and the second mounting boss 23 are circular bosses.

The end cover 20 defines two avoidance grooves 201, an explosion-proof hole 202, an electrolyte injection hole 203, and two mounting holes 204. Openings of the two avoidance grooves 201 are both positioned on a surface of the end cover 20 facing towards the lower plastic member 10. Both of the two avoidance grooves 201 are recessed from the surface of the end cover 20 facing towards the lower plastic member 10 to the surface of the end cover 20 away from the lower plastic member 10. In the length direction of the end cover 20 (i.e., the length direction D₂ of the end-cover assembly 120), the two avoidance grooves 201 are respectively positioned at the opposite sides of the end cover 20, and are respectively arranged corresponding to the two mounting bosses 21. The two avoidance grooves 201 are respectively a first avoidance groove 205 and a second avoidance groove 206. The first avoidance groove 205 is arranged corresponding to the first mounting boss 22, and serves to avoid the first assembly boss 111. The second avoidance groove 206 is arranged corresponding to the second mounting boss 23, and serves to avoid the second assembly boss 122. Exemplarily, the first avoidance groove 205 is a square groove adapted to the first assembly boss 111, and the second avoidance groove 206 is a square groove adapted to the second assembly boss 122.

It may be noted that both the first avoidance groove 205 and the second avoidance groove 206 may be formed by a stamping process. By stamping the end cover 20 from the surface of the end cover 20 facing towards the lower plastic member 10 towards the surface of the end cover 20 facing away from the lower plastic member 10, the first avoidance groove 205 and the second avoidance groove 206 are formed, and at the same time, the first mounting boss 22 and the second mounting boss 23 are also formed.

The explosion-proof hole 202, the electrolyte injection hole 203, and the two mounting holes 204 all extend through the end cover 20 in the thickness direction of the end cover 20 (i.e., in the thickness direction D₁ of the end-cover assembly 120). Specifically, the explosion-proof hole 202 is positioned in the middle of the end cover 20. In the thickness direction of the end-cover assembly 120, the explosion-proof hole 202 is positioned aligned with the grid portion 121. The explosion-proof hole 202 can communicate the inside and the outside of the energy storage apparatus 100 through the grid portion 121. Exemplarily, the explosion-proof hole 202 is an oval hole.

It may be noted that the directional terms such as "outer" and "inner" mentioned in describing the end-cover assembly 120 in the embodiments of the present disclosure are all described based on the orientation of the energy storage device 100 illustrated in FIG. 2. The side facing away from the outside of the housing 110 is referred to as "outer", and the side facing towards the inside of the housing 110 is referred to as "inner". Similar descriptions hereinafter may be understood in the same manner.

In the length direction D₂ of the end cover 20, the electrolyte injection hole 203 is positioned at one side of the explosion-proof hole 202 facing towards the first mounting boss 22, and is spaced apart from both the explosion-proof hole 202 and the first mounting boss 22. The electrolyte injection hole 203 is in communication with the electrolyte inlet hole 113. The electrolyte can be injected into the accommodating cavity of the housing 110 (as illustrated in FIG. 2) through the electrolyte injection hole 203 of the end cover 20 and the electrolyte inlet hole 113 of the positive lower plastic member 11 in sequence, so as to realize the filling of the electrolyte of the energy storage apparatus 100. Exemplarily, the electrolyte injection hole 203 is a circular hole.

In the length direction D₂ of the end cover 20, the two mounting holes 204 are respectively positioned at opposite sides of the explosion-proof hole 202, and are both spaced apart from the explosion-proof hole 202. An opening of each mounting hole 204 is positioned on a surface of one mounting boss 21 facing away from the lower plastic member 10. Specifically, the two mounting holes 204 are respectively a first mounting hole 207 and a second mounting hole 208. An opening of the first mounting hole 207 is positioned on a surface of the first mounting boss 22 positioned away from the positive lower plastic member 11. An opening of the second mounting hole 208 is positioned on a surface of the second mounting boss 23 positioned away from the negative lower plastic member 12. The first mounting hole 207 is in communication with the first through-hole 112, and the second mounting hole 208 is in communication with the second through-hole 123.

It may be noted that in this embodiment, the first mounting hole 207 and the second mounting hole 208 have the same structure. Next, taking the structure of the first mounting hole 207 as an example, the structures of the two mounting holes 204 will be described. To avoid repetition, the structure of the second mounting hole 208 will not be repeatedly described hereinafter. The structures of the first mounting hole 207 and the second mounting hole 208 can both refer to the relevant description of the mounting hole 204 below.

Reference can be made to FIG. 8 and FIG. 9, where FIG. 9 is a schematic cross-sectional structure view of the end cover 20 illustrated in FIG. 7 after being cut along line C-C.

The first mounting hole 207 includes a first mounting-hole portion 2071 and a first recessed-platform-hole portion 2072. In the thickness direction of the end cover 20, the first recessed-platform-hole portion 2072 is positioned at one side of the first mounting-hole portion 2071 and is in communication with the first mounting-hole portion 2071. Specifically, an opening of the first recessed-platform-hole portion 2072 is located on the surface of the first mounting boss 22 facing away from the positive lower plastic member 11. A cross-sectional area of the first recessed-platform-hole portion 2072 is larger than a cross-section area of the first mounting-hole portion 2071. Exemplarily, both the first mounting-hole portion 2071 and the first recessed-platform-hole portion 2072 are circular holes, and a hole diameter of the first recessed-platform-hole portion 2072 is larger than a hole diameter of the first mounting-hole portion 2071.

In this embodiment, the first recessed-platform-hole portion 2072 is spline-shaped. The first recessed-platform-hole portion 2072 is provided with multiple first protrusions 24 on a hole wall of the first recessed-platform-hole portion 2072. The multiple first protrusions 24 are arranged at intervals around the first mounting-hole portion 2071, and are all spaced apart from the first mounting-hole portion 2071. Specifically, each first protrusion 24 includes a first flow-guiding portion 241 positioned facing towards the center of the first recessed-platform-hole portion 2072. A distance between the first flow-guiding portion 241 of each first protrusion 24 and the first mounting-hole portion 2071 is *w*₁ ranging from 0.15 mm to 0.65 mm. Exemplarily, *w*₁ is 0.15 mm. In a direction from the first recessed-platform-hole portion 2072 to the first mounting-hole portion 2071, the thickness of the first flow-guiding portion 241 gradually decreases. Exemplarily, the first flow-guiding portion 241 is tip-shaped, and the tip of the first flow-guiding portion 241 is positioned facing towards the center of the first recessed-platform-hole portion 2072. The first flow-guiding portion 241 includes a first flow-guiding surface 242 positioned facing away from the first mounting-hole portion 2071. An angle between the first flow-guiding surface 242 and a surface of the end cover 20 positioned facing away from the lower plastic member 10 is *θ*₁ ranging from 2 degrees to 15 degrees. Exemplarily, *θ*₁ is 5 degrees.

The first mounting-hole portion 2071 includes a first mounting part 2073 and a first connecting part 2074. The first mounting part 2073 is positioned at one side of the first recessed-platform-hole portion 2072 facing towards the lower plastic member 10, and is spaced apart from the first recessed-platform-hole portion 2072. The first connecting part 2074 is positioned between the first mounting part 2073 and the first recessed-platform-hole portion 2072, and is in communication between the first mounting part 2073 and the first recessed-platform-hole portion 2072. In the direction from the first recessed-platform-hole portion 2072 to the first mounting part 2073, a cross-sectional area of the first connecting part 2074 gradually decreases. Exemplarily, a hole wall surface of the first connecting part 2074 is an arc-shaped surface.

It may be noted that in the positive electrode assembly 70, during the injection molding process of the first upper plastic member, a gap between a hole wall of the first mounting hole 207 and the first terminal-post may serve as a flow channel, and the first flow-guiding surface 242 of the first flow-guiding portion 241 and a hole wall surface of the first connecting part 2074 can guide the plastic to flow smoothly, so that the gap between the hole wall of the first mounting hole 207 and the first terminal-post can serve as a smooth flow channel. The first flow-guiding surface 242 of the first flow-guiding portion 241 forms an inclined flow channel. The hole wall surface of the first connecting part 2074 forms an arc-shaped waterfall-like flow channel. Therefore, with the design of the first flow-guiding surface 242 of the first flow-guiding portion 241 and the hole wall surface of the first connecting part 2074, the width of the gap between the first terminal-post and the end cover 20 can be increased, to provide a smooth flow channel for the molten plastic, prevent air trap caused by the excessively-narrow gap between the first terminal-post and the end cover 20, and prevent affecting the flowability of the molten plastic, thereby helping to improve the injection-molding efficiency of the first upper plastic member. In addition, the thickness of the first upper plastic member after molding can also be increased to avoid the first upper plastic member from being too weak, thereby helping to improve the structural strength of the first upper plastic member. Moreover, after injection molding of the first upper plastic member, the multiple first flow-guiding portions 241 are arranged in an annular, spline-like configuration with alternating heights, which can further restrict rotation of the first upper plastic member relative to the end cover 20 and improve the torsional resistance of the positive electrode assembly 70.

Reference can be made to FIG. 7 and FIG. 8. The second mounting hole 208 includes a second mounting-hole portion 2081 and a second recessed-platform-hole portion 2082. In the thickness direction of the end cover 20, the second recessed-platform-hole portion 2082 is positioned at one side of the second mounting-hole portion 2081 and is in communication with the second mounting-hole portion 2081. The second mounting-hole portion 2081 and the first mounting-hole portion 2071 have the same structure. The second recessed-platform-hole portion 2082 and the first recessed-platform-hole portion 2072 have the same structure. The cooperation relationship between the second mounting-hole portion 2081 and the second recessed-platform-hole portion 2082 is the same as the cooperation relationship between the first mounting-hole portion 2071 and the first recessed-platform-hole portion 2072, which will not be repeated here. The structures of the second mounting-hole portion 2081 and the first mounting-hole portion 2071, as well as the cooperation relationship between the second mounting-hole portion 2081 and the first mounting-hole portion 2071, can refer to the relevant descriptions of the first mounting-hole portion 2071 and the first recessed-platform-hole portion 2072 above.

It may be noted that for the negative electrode assembly 80, during the injection molding process of a negative upper plastic member, a gap between a hole wall of the second mounting hole 208 and the negative terminal-post may serve as a flow channel, and a second flow-guiding surface of a second flow-guiding portion and a hole wall surface of a second connecting portion can guide the plastic to flow smoothly, so that the gap between the hole wall of the second mounting hole 208 and the negative terminal-post can serve as a smooth flow channel. With the design of the second flow-guiding surface of the second flow-guiding portion and the hole wall surface of the second connecting portion, the width of the gap between the negative terminal-post and the end cover 20 can be increased to prevent air trap between the negative terminal-post and the end cover 20 caused by the excessively-narrow gap between the negative terminal-post and the end cover 20, and the thickness of the negative upper plastic member after molding can also be increased to avoid the negative upper plastic member from being too weak, thereby helping to improve the structural strength of the negative upper plastic member.

Reference can be made to FIG. 4, FIG. 6, and FIG. 7. The explosion-proof valve 30 is mounted at one side of the end cover 20 positioned facing towards the lower plastic member 10, covers an opening of the explosion-proof hole 202 positioned facing towards the lower plastic member 10, and is arranged opposite to the grid portion 121. The protective sheet 40 is mounted at one side of the end cover 20 positioned facing away from the lower plastic member 10 and covers an opening of the explosion-proof hole 202 positioned facing away from the lower plastic member 10, so as to protect the explosion-proof valve 30 and prevent foreign objects or external forces from damaging the explosion-proof valve 30. Exemplarily, both the explosion-proof valve 30 and the protective sheet 40 may be mounted on the end cover 20 by welding.

It can be understood that since the explosion-proof hole 202 can communicate the inside and the outside of the energy storage apparatus 100, when the air pressure inside the energy storage apparatus 100 is too high, the gas inside the energy storage apparatus 100 can impact the explosion-proof valve 30 through the grid portion 121. As a result, the explosion-proof valve 30 can be ruptured under the action of the air pressure, and the gas inside the energy storage apparatus 100 can be timely discharged to the outside of the energy storage apparatus 100 through the grid portion 121 and the explosion-proof hole 202 in sequence, thereby avoiding the explosion of the energy storage apparatus 100 and improving the safety and reliability of the energy storage apparatus 100.

The sealing member 50 is mounted in the electrolyte injection hole 203 and seals the electrolyte injection hole 203, preventing impurities such as external dust or moisture from entering the inside of the energy storage apparatus 100 through the electrolyte injection hole 203 of the end cover 20 and the electrolyte inlet hole 113 of the lower plastic member 10 in sequence, and ensuring the reliability of the energy storage apparatus 100 in use.

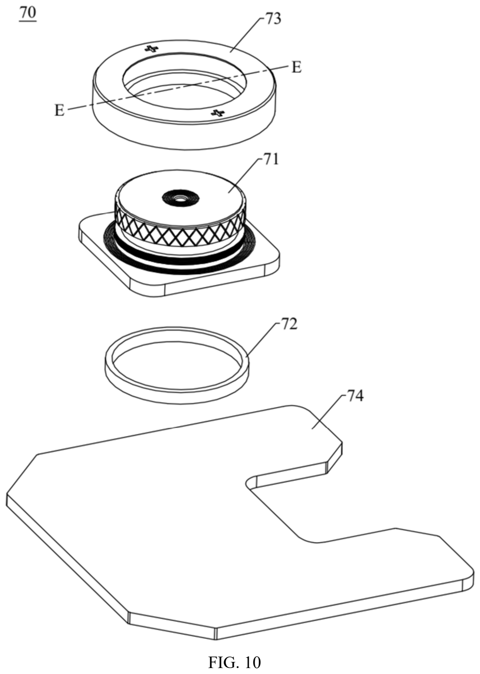

Reference can be made to FIG. 4 and FIG. 10, where FIG. 10 is an exploded schematic structural view of a positive electrode assembly 70 of the end-cover assembly 120 illustrated in FIG. 5.

The positive electrode assembly 70 includes a first terminal-post 71, a first sealing ring 72, a first upper plastic member 73, and a first connector 74. The first terminal-post 71 passes through the first through-hole 112 of the positive lower plastic member 11 and the first mounting hole 207 of the end cover 20. Both the first upper plastic member 73 and the first sealing ring 72 are sleeved on the first terminal-post 71 and can isolate the first terminal-post 71 from the end cover 20, so that the first terminal-post 71 is insulated from the end cover 20. The first upper plastic member 73 is positioned at one side of the first sealing ring 72 facing away from the lower plastic member 10. The first connector 74 is fixedly connected to the first terminal-post 71, and is electrically connected between the first terminal-post 71 and a positive tab of the electrode assembly.

It may be noted that during the assembly process of the end-cover assembly 120, the lower plastic member 10 is aligned with the end cover 20 first. Then, in a direction from the lower plastic member 10 to the end cover 20, the first terminal-post 71 sleeved with the first sealing ring 72 is passed through the first through-hole 112 of the positive lower plastic member 11 and the first mounting hole 207 of the end cover 20 in sequence, and a pressure is applied to a flange portion of the first terminal-post 71 to squeeze the first sealing ring 72, so that the first sealing ring 72 is clamped between the first terminal-post 71 and the hole wall of the first mounting hole 207. Sequentially, the assembly is placed into an injection mold and injection molding is performed in the injection mold. During the injection molding process, the plastic may flow into the gap between the hole wall of the first mounting hole 207 and the first terminal-post 71. After the injection molding is completed, wait for the plastic to cool and then demold, and the first upper plastic member 73 can be formed.

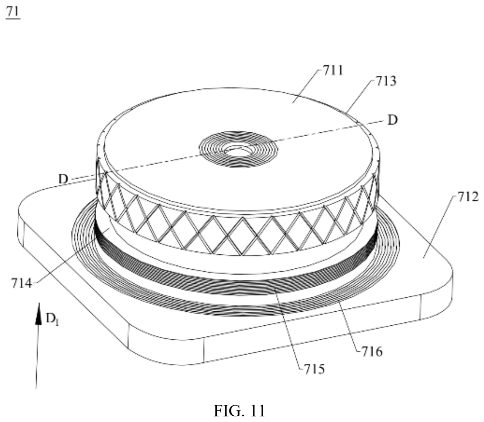

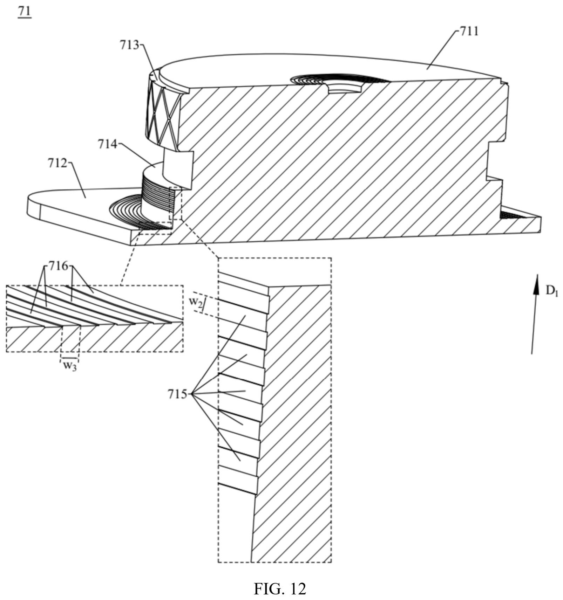

Reference can be made to FIG. 4, FIG. 11, and FIG. 12, where FIG. 11 is a schematic structural view of a first terminal-post 71 of the positive electrode assembly 70 illustrated in FIG. 10, and FIG. 12 is a schematic structural view of the first terminal-post 71 illustrated in FIG. 11 after being cut along line D-D.

The first terminal-post 71 includes a first post-body portion 711 and a first flange portion 712. The first flange portion 712 is fixedly connected to the first post-body portion 711 at one side of the first post-body portion 711 in the height direction (i.e., the thickness direction D₁ of the end-cover assembly 120). Exemplarily, the first post-body portion 711 and the first flange portion 712 may be integrally formed.

In this embodiment, the first post-body portion 711 passes through the first through-hole 112 of the positive lower plastic member 11 and the first mounting hole 207 of the end cover 20. The first post-body portion 711 is provided with a first stepped groove 713 and a first annular groove 714. An opening of the first stepped groove 713 is positioned on a surface of the first post-body portion 711 facing away from the first flange portion 712. The first stepped groove 713 is recessed from the surface of the first post-body portion 711 facing away from the first flange portion 712 towards the first flange portion 712, and extends through a circumferential surface of the first post-body portion 711. The first stepped groove 713 is defined around the periphery of the first post-body portion 711.

During the process of injection molding the first upper plastic member 73, a mold stop ring can abut against a groove wall of the first stepped groove 713 to prevent the plastic from overflowing to the surface of the first post-body portion 711 facing away from the first flange portion 712, thereby preventing the plastic from affecting the welding stability between the surface of the first post-body portion 711 facing away from the first flange portion 712 and a connecting sheet such as an aluminum bus bar in the subsequent process.

In the height direction of the first post-body portion 711, the first annular groove 714 is positioned at one side of the first stepped groove 713 facing towards the first flange portion 712, and is spaced apart from the first stepped groove 713. Specifically, an opening of the first annular groove 714 is defined on the circumferential surface of the first post-body portion 711. The first annular groove 714 is recessed from the circumferential surface of the first post-body portion 711 towards the center of the first post-body portion 711. The first annular groove 714 is defined around the periphery of the first post-body portion 711. During the process of injection molding the first upper plastic member 73, with the design of the first annular groove 714, the contact area between the plastic and the first post-body portion 711 can be increased, and the connection stability between the first upper plastic member 73 and the first terminal-post 71 can be improved.

The first post-body portion 711 is further provided with a first texture ring 715. In the height direction of the first post-body portion 711, the first texture ring 715 is positioned at one side of the first annular groove 714 facing towards the first flange portion 712. The first texture ring 715 is disposed on the circumferential surface of the first post-body portion 711. The first texture ring 715 protrudes from the circumferential surface of the first post-body portion 711 in a direction away from the center of the first post-body portion 711. The first texture ring 715 is disposed around the periphery of the first post-body portion 711. In the height direction of the first post-body portion 711, the width of the first texture ring 715 is *w*₂ ranging from 0.02 mm to 0.45 mm. Exemplarily, *w*₂ is 0.15 mm.

In this embodiment, there are multiple first textured rings 715. In the height direction of the first post-body portion 711, the multiple first textured rings 715 are arranged at intervals in sequence. With the design of the multiple first textured rings 715, the contact area between the first post-body portion 711 and the first sealing ring 72 can be increased, thereby helping to improve the sealing performance of the first sealing ring 72. When the first terminal-post 71 is subjected to cut-milling forming, the first texture ring 715 can be formed in one operation by controlling the depth of the cutter head, thereby reducing the processing operations of the first terminal-post 71 and helping to reduce the processing cost of the first terminal-post 71.

The first flange portion 712 is provided with a first pattern ring 716. The first pattern ring 716 is disposed on the surface of the first flange portion 712 facing towards the first post-body portion 711. The first pattern ring 716 protrudes from the surface of the first flange portion 712 facing towards the first post-body portion 711 in a direction towards the first post-body portion 711. The first pattern ring 716 is positioned at a position of the first flange portion 712 close to the first post-body portion 711 and is disposed around the first post-body portion 711. In a direction from the center of the first flange portion 712 to an edge of the first flange portion 712, the width of the first pattern ring 716 is *w*₃ ranging from 0.01 mm to 0.35 mm. Exemplarily, *w*₃ is 0.05 mm.

In this embodiment, there are multiple first pattern rings 716. In the direction from the center of the first flange portion 712 to the edge of the first flange portion 712, the multiple first pattern rings 716 are arranged at equal intervals in sequence. With the design of multiple first pattern rings 716, the contact area between the first flange portion 712 and the first sealing ring 72 can be increased, thereby helping to improve the sealing performance of the first sealing ring 72. When the first terminal-post 71 is subjected to cut-milling forming, the first pattern ring 716 can be formed in one operation by controlling the depth of the cutter head, thereby reducing the processing operations of the first terminal-post 71 and helping to reduce the processing cost of the first terminal-post 71.

In addition, *w*₃ is less than *w*₂. It can be understood that in the end-cover assembly 120, the contact area between the first flange portion 712 of the first terminal-post 71 and the first sealing ring 72 is relatively large, while the contact area between the first post-body portion 711 of the first terminal-post 71 and the first sealing ring 72 is relatively small. The width of the first pattern ring 716 is smaller than the width of the first texture ring 715, which means that the first pattern ring 716 is thinner and the first texture ring 715 is rougher. Therefore, the overall sealing performance of the first terminal-post 71 is more uniform, the path for the electrolyte inside the energy storage apparatus 100 to flow out through the gap between the first terminal-post 71 and the first sealing ring 72 is longer, and the sealing performance of the first sealing ring 72 is better.

The first sealing ring 72 is sleeved on the first post-body portion 711 and abuts against the first flange portion 712. Specifically, the first sealing ring 72 is sleeved on part of the first post-body portion 711 positioned facing towards the first flange portion 712 and is clamped between the first post-body portion 711 and the hole wall surface of the first mounting hole 207. The surface of the first sealing ring 72 positioned facing towards the first flange portion 712 abuts against the surface of the first flange portion 712 positioned facing towards the first post-body portion 711. The first sealing ring 72 is clamped between the first flange portion 712 and the first upper plastic member 73. The first sealing ring 72 covers multiple first texture rings 715 and the multiple first pattern rings 716, so as to increase the contact area between the first sealing ring 72 and each of the first post-body portion 711 and the first flange portion 712, thereby helping to improve the sealing performance of the first sealing ring 72.

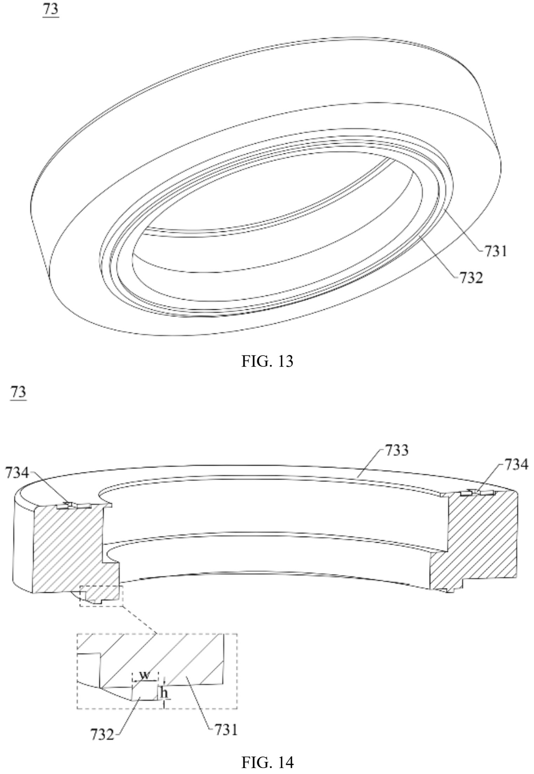

Reference can be made to FIG. 4, FIG. 13, and FIG. 14, where FIG. 13 is a schematic structural view of a first upper plastic member 73 of the positive electrode assembly 70 illustrated in FIG. 10 from another angle, and FIG. 14 is a schematic structural view of a first upper plastic member 73 of the positive electrode assembly 70 illustrated in FIG. 10 after being cut along line D-D.

The first upper plastic member 73 is sleeved on the first post-body portion 711, is connected between the first post-body portion 711 and the hole wall of the first mounting hole 207, and covers a groove wall surface of the first annular groove 714 and first flow-guiding portions 241 of the multiple first protrusion 24. The first upper plastic member 73 is provided with a first protruding ring 731, a first protruding rib 732, and a first stepped ring 733. The first protruding ring 731 is disposed on a surface of the first upper plastic member 73 positioned facing towards the end cover 20, and extends from the surface of the first upper plastic member 73 positioned facing towards the end cover 20 in a direction away from the end cover 20. The first protruding ring 731 is positioned around the first post-body portion 711. At least part of the first protruding ring is positioned in the first mounting hole 207, is fixedly connected between the hole wall of the first mounting hole 207 and the first post-body portion 711, and abuts against the surface of the first sealing ring 72 positioned facing away from the first flange portion 712.

The first protruding rib 732 is disposed on the surface of the first protruding ring 731 positioned facing towards the first sealing ring 72, and extends from the surface of the first protruding ring 731 positioned facing towards the first sealing ring 72 in a direction towards the first sealing ring 72. The first protruding rib 732 is disposed around the first post-body portion 711, is positioned between the outer peripheral surface of the first post-body portion 711 and the inner side surface of the first sealing ring 72, and is connected between the first post-body portion 711 and the first sealing ring 72, so as to further improve the sealing performance between the first terminal-post 71 and the first sealing ring 72. In addition, the first protruding rib 732 can also isolate the first post-body portion 711 from the hole wall of the first mounting hole 207, so as to increase the creepage distance between the first post-body portion 711 and the hole wall of the first mounting hole 207, thereby helping to ensure the insulation performance between the first terminal-post 71 and the end cover 20. The thickness *h* of the first annular rib 732 ranges from 0.15 mm to 1.05 mm, and the width w of the first annular rib 732 ranges from 0.05 mm to 0.55 mm, which can not only increase the creepage distance between the hole wall of the first mounting hole 207 and the first post-body portion 711 to ensure the insulation performance between the first terminal-post 71 and the end cover 20, but also help to improve the sealing performance between the first sealing ring 72 and the first upper plastic member 73.

It may be noted that when the first sealing ring 72 is sleeved on the first post-body portion 711, the first annular groove 714 helps the first sealing ring 72 to position the central axis of the first post-body portion 711. After the first sealing ring 72 is squeezed by the end cover 20, the inner side surface of the first sealing ring 72 is not abutted by the end cover 20 and undergoes deformation and warpage, so that the inner side surface of the first sealing ring 72 is separated from the outer peripheral surface of the first post-body portion 711 to define a gap. During the process of injection molding the first upper plastic member 73, the molten plastic liquid not only flows into the first annular groove 714 and fills the first annular groove 714, but also flows into the gap between the inner side surface of the first sealing ring 72 and the outer peripheral surface of the first post-body portion 711. After the molten plastic liquid cools, the first upper plastic member 73 snap-fits the first terminal-post 71 in the first mounting hole 207, and the first annular rib 732 is formed.

It can be understood that when the first terminal-post 71 is subjected to cut-milling forming, metal burrs may form on the surface of the first terminal-post 71. During the injection molding process of the first upper plastic member 73, the first protruding rib 732 can also press and fold the metal burrs, so that a short-circuit between the first terminal-post 71 and the end cover 20, caused by the metal burrs extending into the first mounting hole 207, can be avoided, thereby ensuring the insulation between the first terminal-post 71 and the end cover 20.

The first stepped ring 733 is disposed at one end of the first upper plastic member 73 positioned facing away from the end cover 20, and extends from the side surface of the first upper plastic member 73 positioned facing towards the first terminal-post 71 in a direction towards the first terminal-post 71. Specifically, the first stepped ring 733 partially covers the first stepped groove 713, is fixedly connected to the groove wall of the first stepped groove 713, and is disposed around the first post-body portion 711. The inner side surface of the first stepped ring 733 is spaced apart from the side wall surface of the first stepped groove 713. Exemplarily, the surface of the first stepped ring 733 positioned facing away from the end cover 20 may be flush with the surface of the first upper plastic member 73 positioned facing away from the end cover 20.

It may be noted that during the injection molding process of the first upper plastic member 73, an injection mold is inserted into a gap between the inner side surface of the first stepped ring 733 and the side wall surface of the first stepped groove 713, and abuts against the side wall surface of the first stepped groove 713 and part of the bottom wall surface of the first stepped groove 713, to define a closed mold cavity. Therefore, the molten plastic liquid is prevented from overflowing to the surface of the first terminal-post 71 facing away from the end cover 20, and the subsequent welding effect between the first terminal-post 71 and a connecting sheet such as a bus bar.

In addition, the first upper plastic member 73 is further provided with a first identification groove 734. An opening of the first identification groove 734 is positioned on the surface of the first upper plastic member 73 facing away from the end cover 20. The first identification groove 734 is recessed from the surface of the first upper plastic member 73 facing away from the end cover 20 in the direction towards the end cover 20. There are two first identification grooves 734, and the two first identification grooves 734 are respectively positioned on the opposite sides of the first upper plastic member 73. Exemplarily, the first identification groove 734 is in a "cross" shape. In some other embodiments, the first identification groove 734 may also be in a "positive" shape or other shapes.

The first connector 74 is mounted at an inner side of the positive lower plastic member 11, and is positioned at one side of the first flange portion 712 facing away from the first post-body portion 711. Specifically, one end of the first connector 74 is electrically connected to the first flange portion 712, and the other end of the first connector 74 is electrically connected to the positive tab of the electrode assembly. Exemplarily, the first connector 74 may be electrically connected to the first flange portion 712 and/or a negative tab of the electrode assembly by welding.

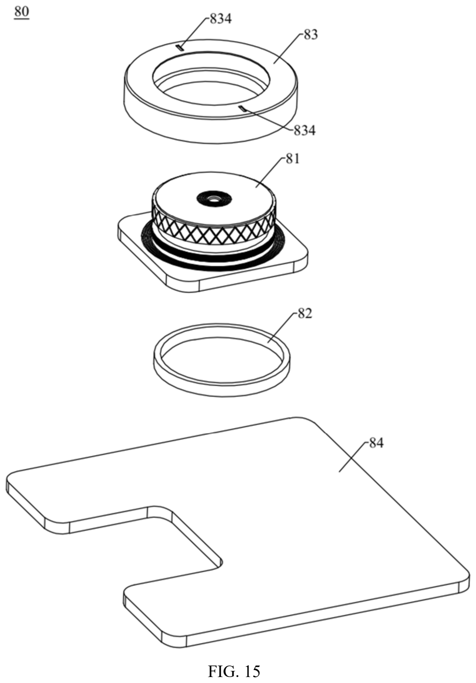

Reference can be made to FIG. 4 and FIG. 15, where FIG. 15 is an exploded schematic structural view of a negative electrode assembly 80 of the end-cover assembly 120 illustrated in FIG. 5.

The negative electrode assembly 80 includes a second terminal-post 81, a second sealing ring 82, a second upper plastic member 83, and a second connector 84. The second terminal-post 81 passes through the second through-hole 123 of the negative lower plastic member 12 and the second mounting hole 208 of the end cover 20. Both the second upper plastic member 83 and the second sealing ring 82 are sleeved on the second terminal-post 81 and can isolate the second terminal-post 81 from the end cover 20, so that the second terminal-post 81 is insulated from the end cover 20. The second upper plastic member 83 is positioned at one side of the second sealing ring 82 facing away from the lower plastic member 10. The second connector 84 is fixedly connected to the second terminal-post 81 and is electrically connected between the second terminal-post 81 and the negative tab of the electrode assembly.

For structures of the second terminal-post 81, the second sealing ring 82, the second upper plastic member 83, and the second connector 84, as well as the cooperation relationships between each two of them, reference can be made to the relevant descriptions of the first terminal-post 71, the first sealing ring 72, the first upper plastic member 73, and the first connector 74 above, and details are not repeated here. The difference between the negative electrode assembly 80 and the positive electrode assembly 70 lies in that in the second upper plastic member 83, a second identification groove 834 is in a "-" shape. In some other embodiments, the second identification groove 834 may also be in a "negative" shape or other shapes.

The present disclosure further provides an electricity-consumption device. The electricity-consumption device includes the above-mentioned energy storage apparatus 100. The energy storage apparatus 100 is configured to power the electricity-consumption device. The electricity-consumption device may be a device that requires electrical energy, such as a new energy vehicle, an energy storage station, and a server.

The above descriptions are only the specific implementations of the present disclosure, but the protection scope of the present disclosure is not limited to the above. Any skilled in the technical field can easily think of changes or replacements within the technical scope of the present disclosure, and the changes or replacements should be covered in the protection scope of the present disclosure. The embodiments of the present disclosure and features in the embodiments may be mutually combined without conflicts. Therefore, the protection scope of the present disclosure shall be subject to the protection scope of the claims.

## Claims

1. An end-cover assembly, applicable in an energy storage apparatus and comprising an end cover and a terminal-post assembly, wherein the end cover defines a mounting hole, and the mounting hole extends through the end cover in a thickness direction of the end cover; the terminal-post assembly comprises a terminal post, a sealing ring, and an upper plastic member, the terminal post comprises a post-body portion and a flange portion, the post-body portion defines an annular groove, the annular groove has an opening positioned on an outer peripheral surface of the post-body portion, and the annular groove is defined around a periphery of the post-body portion; the post-body portion passes through the mounting hole, the flange portion is fixedly connected to one end of the post-body portion, the sealing ring is sleeved on the post-body portion and is clamped between the end cover and the terminal post, and the flange portion abuts against a surface of the sealing ring positioned facing towards the flange portion; and
the upper plastic member is sleeved on the post-body portion and covers a groove wall surface of the annular groove, the upper plastic member is provided with a protruding ring and a protruding rib, and the protruding ring is disposed on a surface of the upper plastic member positioned facing towards the end cover and is positioned around the post-body portion; at least part of the protruding ring is positioned in the mounting hole, is disposed between a hole wall of the mounting hole and the post-body portion, and abuts against part of a surface of the sealing ring positioned facing away from the flange portion; and the protruding rib is disposed on a surface of the protruding ring positioned facing towards the sealing ring and is positioned around the post-body portion, and the protruding rib is positioned between an inner side surface of the sealing ring and the outer peripheral surface of the post-body portion.

2. The end-cover assembly of claim 1, wherein the protruding rib has a thickness ranging from 0.15 mm to 1.05 mm.

3. The end-cover assembly of claim 1, wherein the protruding rib has a width ranging from 0.05 mm to 0.55 mm.

4. The end-cover assembly of claim 1, wherein the post-body portion defines a stepped groove, the stepped groove has an opening positioned on a surface of the post-body portion positioned facing away from the flange portion, and the stepped groove is defined around an edge of the post-body portion and extends through the outer peripheral surface of the post-body portion; and
the upper plastic member is further provided with a stepped ring, the stepped ring is fixedly connected to a side surface of the upper plastic member positioned facing towards the terminal post, and is positioned at one side of the upper plastic member positioned facing away from the end cover, the stepped ring partially covers the stepped groove, and an inner side surface of the stepped ring is spaced apart from a side wall surface of the stepped groove.

5. The end-cover assembly of claim 1, wherein the mounting hole comprises a mounting hole portion and a recessed-platform hole portion, the recessed-platform hole portion is positioned at one side of the mounting hole portion and is in communication with the mounting hole portion, a cross-sectional area of the recessed-platform hole portion is larger than a cross-sectional area of the mounting hole portion, the recessed-platform hole portion is provided with a plurality of flow-guiding portions on a hole wall of the recessed-platform hole portion, the plurality of flow-guiding portions are arranged around the mounting hole portion at intervals, and the upper plastic member covers the plurality of flow-guiding portions.

6. The end-cover assembly of claim 5, wherein there is a distance between each of the plurality of flow-guiding portions and the mounting hole portion.

7. The end-cover assembly of claim 6, wherein the distance between each of the plurality of flow-guiding portions and the mounting hole portion ranges from 0.15 mm to 0.65 mm.

8. The end-cover assembly of one of claims 5 to 7, wherein a thickness of each of the plurality of flow-guiding portions gradually decreases in a direction from the recessed-platform hole portion towards the mounting hole portion.

9. The end-cover assembly of claim 8, wherein each of the plurality of flow-guiding portions has a flow-guiding surface, and an angle between the flow-guiding surface and a surface of the end cover ranges from 2 degrees to 15 degrees.

10. The end-cover assembly of claim 5, wherein the mounting hole portion comprises a mounting part and a connecting part, the connecting part is in communication between the mounting part and the recessed-platform hole portion, and a cross-section of the connecting part gradually decreases in the direction from the recessed-platform hole portion to the mounting hole portion.

11. The end-cover assembly of claim 10, wherein the connecting part has a hole wall surface that is an arc-shaped surface.

12. An energy storage apparatus comprising a housing and the end-cover assembly of any one of claims 1 to 11, wherein the end-cover assembly is mounted at one side of the housing.

13. An electricity-consumption device comprising the energy storage apparatus of claim 12, wherein the energy storage apparatus is configured to power the electricity-consumption device.
